# EUROPÄISCHE PATENTSCHRIFT

(11) **EP 3 464 000 B1**
(45) Veröffentlichungstag und Bekanntmachung des Hinweises auf die Patenterteilung: **13.05.2020**
(21) Anmeldenummer: 17739927.6
(22) Anmeldetag: 06.07.2017
(51) Int. Cl.: B60T 13/66, B60T 17/22, B61L 23/02, B61L 27/00, B61L 23/04

(54) **VERFAHREN SOWIE VORRICHTUNG ZUM AUTOMATISCHEN PRÜFEN VON BREMSEN EINES SPURGEBUNDENEN FAHRZEUGS**
METHOD AND DEVICE FOR AUTOMATICALLY CHECKING BRAKES OF A TRACK-BOUND VEHICLE
PROCÉDÉ ET DISPOSITIF DE VÉRIFICATION AUTOMATIQUE DE FREINS D'UN VÉHICULE GUIDÉ

(30) Priorität: 19.07.2016 DE 102016213133
(43) Veröffentlichungstag der Anmeldung: 10.04.2019
(73) Patentinhaber: Siemens Mobility GmbH, 81739 München (DE)
(72) Erfinder: BRABAND, Jens, 38106 Braunschweig (DE); HUSTER, Mario, 38173 Evessen (DE); MÖNNICH, Hans-Jörg, 38118 Braunschweig (DE)
(86) Internationale Anmeldenummer: PCT/EP2017/066850
(87) Internationale Veröffentlichungsnummer: WO 2018/015164

(56) Entgegenhaltungen:
- EP-A1- 1 719 680
- WO-A1-2016/027072
- US-A1- 2014 088 801

## Beschreibung

Für einen sicheren Betrieb spurgebundener Fahrzeuge ist eine zuverlässige Funktion der Bremsen von grundlegender Bedeutung. Daher ist aus Sicherheitsgründen etwa bei Schienenfahrzeugen vor oder auch während des Betriebs die korrekte Funktion der Bremsen zu prüfen. Hierbei müssen die Bremsen im Rahmen einer Bremsprobe dahingehend geprüft werden, dass eine einer Ansteuerung durch eine Bremssteuerung des spurgebundenen Fahrzeugs entsprechende korrekte Betätigung erfolgt. Darüber hinaus ist in der Regel auch zu prüfen, dass die Bremsen ein der Ansteuerung durch die Bremssteuerung entsprechendes korrektes Löseverhalten aufweisen.

In der Praxis kann eine entsprechende Bremsprobe beispielsweise derart ablaufen, dass seitens des jeweiligen Triebfahrzeugführers beziehungsweise eines bedienenden Bremsprobeberechtigten die Hauptluftleitung auf 5 Bar gefüllt wird und hieraufhin im Rahmen eines Zustandsganges u.a. der Lösezustand der Bremsen, der Lösezustand der Feststellbremsen sowie der Zustand der Bremsbauteile geprüft wird. Im weiteren Verlauf wird die Bremse angelegt und durch die entsprechende Bedienperson durch einen weiteren Zustandsgang, d.h. ein erneutes Abschreiten des Zuges, geprüft, ob alle Bremsen angelegt sind. Abschließend kann nach einem Lösen der Bremse nochmals der Lösezustand aller Bremsen überprüft werden. Insbesondere bei langen Güterzügen kann eine Bremsprobe im Falle einer vollständigen Prüfung ein bis zwei Stunden und im Falle einer Nachprüfung bis zu 30 Minuten dauern. Hierdurch wird nicht nur die Bereitstellung des Zuges entsprechend verzögert, sondern darüber hinaus wird auch für die entsprechende Zeitdauer qualifiziertes Personal gebunden. Ein weiterer Nachteil besteht darin, dass durch das spurgebundene Fahrzeug während der Dauer der Prüfung der Bremsen andere Ressourcen, etwa in Form eines durch das betreffende Fahrzeug belegten Ausfahrgleises einer Zugbildungsanlage, blockiert werden.

Der vorliegenden Erfindung liegt die Aufgabe zugrunde, ein Verfahren sowie eine Vorrichtung zum Prüfen von Bremsen eines spurgebundenen Fahrzeugs anzugeben, die eine automatische Prüfung der Bremsen mit vergleichsweise geringem Realisierungsaufwand ermöglichen.

Das Dokument US 2014088801 A1 beschreibt ein Verfahren zum Überwachen der Leistung einer Radbremse für ein Rad in einem Zugfahrzeug. Das Verfahren kann das Erfassen einer ersten Temperatur des Rads bei deaktivierter Radbremse umfassen. Das Verfahren kann auch das Aktivieren der Radbremse und das Erfassen einer zweiten Temperatur des Rades bei aktivierter Radbremse umfassen. Das Verfahren kann das Bestimmen eines Radbremszustands basierend auf mindestens der ersten und der zweiten Temperatur des Rads umfassen.

Verfahren und Vorrichtungen zum Erkennen von Anomalien in den Radsätzen von Schienenfahrzeugen, beispielsweise zum Erkennen von Defekten wie Radabflachungen eines Rades wird in Dokument WO 2016 027 072 A1 beschrieben. Das Verfahren verwendet einen verteilten akustischen Sensor mit einer optischen Erfassungsfaser, die entlang mindestens eines Teils eines Schienenstrangs angeordnet ist, während sich ein Zug entlang dieses Teils des Strangs bewegt. Der verteilte akustische Sensor erfasst akustische Signale von mehreren longitudinalen Erfassungsabschnitten der optischen Erfassungsfaser. Ein Prozessor analysiert die akustischen Signale, um die Zuggeschwindigkeit zu bestimmen. Nachdem der Prozessor die Zuggeschwindigkeit bestimmt hat, analysiert dieser die akustischen Signale auf ein charakteristisches akustisches Signal, um eine Anomalie in einem Radsatz zu erfassen, wobei das charakteristische akustische Signal auf der bestimmten Zuggeschwindigkeit basiert. Insbesondere kann das Verfahren auf einem ersten Streckenabschnitt angewendet werden, auf dem der Zug mit einer ersten Geschwindigkeit fährt, und auf einem zweiten Streckenabschnitt, auf dem der Zug mit einer zweiten unterschiedlichen Geschwindigkeit fährt. Das charakteristische akustische Signal kann ein sich wiederholendes Signal mit einer Frequenz sein, das proportional zur Zuggeschwindigkeit variiert. Diese Aufgabe wird erfindungsgemäß gelöst durch ein Verfahren zum automatischen Prüfen von Bremsen eines spurgebundenen Fahrzeugs nach Anspruch 1, wobei mittels einer streckenseitigen Sensoreinrichtung während und/oder nach einer Betätigung der Bremsen des spurgebundenen Fahrzeugs auf die Betätigung der Bremsen bezogene Sensordaten erfasst werden und anhand einer für die jeweilige Bremse oder eine jeweilige Gruppe der Bremsen des spurgebundenen Fahrzeugs spezifischen Auswertung der Sensordaten die erfolgreiche Betätigung der jeweiligen Bremse oder der jeweiligen Gruppe der Bremsen geprüft wird.

Im Rahmen der vorliegenden Erfindung kann es sich bei dem spurgebundenen Fahrzeug um ein spurgebundenes Fahrzeug beliebiger Art handeln. Dies bedeutet einerseits, dass das spurgebundene Fahrzeug beispielsweise als Schienenfahrzeug, als spurgeführtes Fahrzeug mit Gummibereifung oder als Magnetschwebebahn ausgeführt sein kann. Andererseits kann das spurgebundene Fahrzeug aus einem Fahrzeugteil oder mehreren Fahrzeugteilen zusammengesetzt sein. Als ein Beispiel hierfür sei eine Lokomotive mit einem oder mehreren gekoppelten Personen- oder Güterwagen genannt. Alternativ hierzu kann das spurgebundene Fahrzeug beispielsweise auch als Triebfahrzeug ausgebildet sein, wobei dieses jeweils einen oder mehrere angetriebene und/oder nicht angetriebene Fahrzeuge beziehungsweise Wagen umfassen kann.

Gemäß dem ersten Schritt des erfindungsgemäßen Verfahrens zum automatischen Prüfen von Bremsen eines spurgebundenen Fahrzeugs werden mittels einer streckenseitigen Sensoreinrichtung während und/oder nach einer Betätigung der Bremsen des spurgebundenen Fahrzeugs auf die Betätigung der Bremsen bezogene Sensordaten erfasst. Im grundlegenden Unterschied zu ebenfalls denkbaren Verfahren, bei denen fahrzeugseitig Sensordaten erfasst werden, zeichnet sich das erfindungsgemäße Verfahren somit dadurch aus, dass die auf die Betätigung der Bremsen bezogenen Sensordaten mittels einer streckenseitigen Sensoreinrichtung erfasst werden. Dabei wird durch den Begriff "streckenseitig" zum Ausdruck gebracht, dass die betreffende Sensoreinrichtung keine Komponente des jeweiligen spurgebundenen Fahrzeugs ist, sondern an oder neben einem Fahrweg des spurgebundenen Fahrzeugs, d.h. etwa im Bereich eines Gleises, angeordnet ist.

Gemäß dem zweiten Schritt des erfindungsgemäßen Verfahrens wird anhand einer für die jeweilige Bremse oder einer jeweiligen Gruppe der Bremsen des spurgebundenen Fahrzeugs spezifischen Auswertung der Sensordaten die erfolgreiche Betätigung der jeweiligen Bremse oder der jeweiligen Gruppe der Bremsen geprüft. Dies bedeutet, dass anhand der erfassten Sensordaten eine automatische Prüfung der Bremsen des spurgebundenen Fahrzeugs erfolgt. In Abhängigkeit von den jeweiligen Anforderungen und Gegebenheiten sowie der jeweiligen Ausführungsform des jeweiligen spurgebundenen Fahrzeugs sowie der streckenseitigen Sensoreinrichtung kann die Prüfung hierbei spezifisch für jede einzelne Bremse des spurgebundenen Fahrzeugs oder auch jeweils spezifisch für eine Gruppe von Bremsen des spurgebundenen Fahrzeugs erfolgen. Im letzteren Fall kann die Gruppe der Bremsen beispielsweise durch mehrere Bremsen eines Drehgestells oder auch durch mehrere Bremsen der beiden Räder einer Achse des spurgebundenen Fahrzeugs gebildet werden.

Gemäß dem erfindungsgemäßen Verfahren werden die Sensordaten mittels einer streckenseitigen Sensoreinrichtung in Form eines verteilten akustischen Sensorsystems erfasst, das zumindest einen streckenseitig im Bereich des spurgebundenen Fahrzeugs verlegten Wellenleiter aufweist. Die Verwendung eines verteilten akustischen Sensorsystems als streckenseitige Sensoreinrichtung zum Erfassen der Sensordaten ist dahingehend vorteilhaft, dass entsprechende verteilte akustische Sensorsysteme, die auch als "Fiber Sensing"-System bezeichnet werden, üblicherweise eine Bestimmung der Position einer Geräuschquelle mit einer Genauigkeit in der Größenordnung weniger Meter erlaubt. Hierdurch wird es vorteilhafterweise ermöglicht, beim Betätigen beziehungsweise Lösen der Bremsen des spurgebundenen Fahrzeugs auftretende Geräusche zuverlässig zu detektieren und aufgrund der guten Ortsauflösung eindeutig einer jeweiligen Bremse beziehungsweise einer jeweiligen Gruppe von Bremsen des spurgebundenen Fahrzeugs zuzuordnen. Dabei kann das Betätigen der Bremsen beispielsweise anhand eines typischen, bei der Betätigung eines Bremsgestänges verursachten Geräusches detektiert werden und/oder durch ein entsprechendes Geräusch beim flächigen Anlegen der Bremsbacken an die Räder des spurgebundenen Fahrzeugs. In entsprechender Weise hat auch das Lösen der Bremsen wiederum ein entsprechendes Geräusch des Bremsgestänges zur Folge, so dass anhand entsprechender (weiterer) Sensordaten des verteilten akustischen Sensorsystems und einer nachfolgenden Auswertung dieser Sensordaten eine Prüfung der Bremsen des spurgebundenen Fahrzeugs sowohl in Bezug auf das Anlegen beziehungsweise Betätigen der Bremsen als auch in Bezug auf das Lösen der Bremsen möglich ist.

Das erfindungsgemäße Verfahren ist vorteilhaft, da es eine automatische Prüfung der Bremsen des spurgebundenen Fahrzeugs erlaubt. Vorteilhafterweise geschieht dies mittels der streckenseitigen Sensoreinrichtung derart, dass keine zusätzliche Ausrüstung auf dem spurgebundenen Fahrzeug erforderlich ist. Dies hat zur Folge, dass eine Überprüfung der Bremsen des spurgebundenen Fahrzeugs bezogen auf alle Fahrzeugteile desselben möglich ist, so dass etwa im Falle eines spurgebundenen Fahrzeugs mit Güterwagen eine Prüfung der Bremsen des gesamten spurgebundenen Fahrzeugs einschließlich aller Wagen, d.h. auch denjenigen von Drittanbietern, möglich ist. Hierdurch wird es vorteilhafterweise beispielsweise ermöglicht, in Zugbildungsanlagen eine von dem Ausrüstungsstand der Waggons unabhängige automatische Bremsprobe durchzuführen. Dadurch, dass fahrzeugseitige Änderungen nicht erforderlich sind, weist das erfindungsgemäße Verfahren hierbei den Vorteil eines vergleichsweise geringen Realisierungsaufwands auf.

Das automatische Prüfen der Bremsen des spurgebundenen Fahrzeugs kann darüber hinaus gegebenenfalls nicht nur eine schnellere, sondern auch eine genauere Prüfung der Bremsen ermöglichen, so dass sich auch im Hinblick auf die betriebliche Sicherheit und Zuverlässigkeit Vorteile ergeben können. Sofern dies erforderlich beziehungsweise zweckmäßig sein sollte, kann hierbei die jeweilige Prüfung innerhalb kurzer Zeit mit vergleichsweise geringem Aufwand wiederholt werden, um sicherzustellen, dass die Bremsen auch tatsächlich sowohl hinsichtlich ihrer Betätigung als auch hinsichtlich ihres Lösens einwandfrei funktionieren. Weiterhin kann aufgrund der automatischen Prüfung der Bremsen eine schnellere Bereitstellung des spurgebundenen Fahrzeugs sowie ein effektiverer Einsatz des Betriebspersonals erfolgen. Gleichzeitig erhöht sich aufgrund des Entfallens von Tätigkeiten im Bereich des Fahrwegs des spurgebundenen Fahrzeugs die Betriebssicherheit bei der Prüfung der Bremsen.

Vorteilhafterweise kann das erfindungsgemäße Verfahren auch derart weitergebildet sein, dass mittels der streckenseitigen Sensoreinrichtung während und/oder nach einem Lösen der Bremsen des spurgebundenen Fahrzeugs auf das Lösen der Bremsen bezogene weitere Sensordaten erfasst werden und anhand einer für die jeweilige Bremse oder die jeweilige Gruppe der Bremsen des spurgebundenen Fahrzeugs spezifischen Auswertung der weiteren Sensordaten das erfolgreiche Lösen der jeweiligen Bremse oder der jeweiligen Gruppe der Bremsen geprüft wird. Dabei können die genannten zusätzlichen Verfahrensschritte vor und/oder nach der Erfassung der auf die Betätigung der Bremsen bezogenen Sensordaten sowie deren Auswertung durchgeführt werden. Unabhängig vom Zeitpunkt ihrer Durchführung bietet diese Ausführungsform des erfindungsgemäßen Verfahrens den Vorteil, dass nicht nur in Bezug auf die Betätigung der Bremsen, sondern auch in Bezug auf das Lösen der jeweiligen Bremse oder der jeweiligen Gruppe der Bremsen eine automatische Prüfung ermöglicht wird. Hierdurch wird der betriebliche Ablauf vorteilhafterweise weiter vereinfacht.

Gemäß einer weiteren besonders bevorzugten Ausführungsform des erfindungsgemäßen Verfahrens werden die Sensordaten im Rahmen der Auswertung mit zumindest einem Referenzwert verglichen. Dies ist vorteilhaft, da durch einen Vergleich mit zumindest einem Referenzwert die Auswertung der Sensordaten sowie eine Bewertung dahingehend, ob die jeweilige Bremse oder die jeweilige Gruppe der Bremsen erfolgreich betätigt worden ist, erheblich vereinfacht werden kann. In Abhängigkeit von der jeweiligen Realisierung können hierbei beispielsweise akustische Signaturen des Anlegens der Bremsklötze und der zugehörigen Betätigung des Bremsgestänges als Referenzwerte verwendet werden, wobei ein entsprechender Referenzwert grundsätzlich sowohl für den Fall einer erfolgreichen Betätigung als auch für den Fall einer nicht erfolgreichen Betätigung hinterlegt beziehungsweise verwendet werden kann.

Vorzugsweise kann das erfindungsgemäße Verfahren auch derart weitergebildet sein, dass im Rahmen der Auswertung für das jeweilige spurgebundene Fahrzeug spezifische Fahrzeugdaten berücksichtigt werden. Bei den im Rahmen der Auswertung berücksichtigten für das jeweilige spurgebundene Fahrzeug spezifischen Fahrzeugdaten kann es sich beispielsweise um Daten handeln, welche die Konfiguration des jeweiligen spurgebundenen Fahrzeugs, d.h. beispielsweise die Anzahl seiner Wagen, Achsen und/oder Bremsen, angeben. Dabei können entsprechende Fahrzeugdaten beispielsweise von einem Dispositionssystem einer Zugbildungsanlage bereitgestellt werden.

Grundsätzlich kann die streckenseitige Sensoreinrichtung im Rahmen des erfindungsgemäßen Verfahrens an einem beliebigen Ort eines Fahrweges des spurgebundenen Fahrzeugs angeordnet sein.

Gemäß einer weiteren besonders bevorzugten Ausführungsform des erfindungsgemäßen Verfahrens werden die Sensordaten mittels einer im Bereich eines Ausfahrgleises oder im Bereich eines Einfahrgleises einer Zugbildungsanlage angeordneten streckenseitigen Sensoreinrichtung erfasst. Die Verwendung einer im Bereich eines Ausfahrgleises einer Zugbildungsanlage angeordneten streckenseitigen Sensoreinrichtung ist vorteilhaft, da eine Bremsprobe üblicherweise im Bereich einer Ausfahrgruppe einer Zugbildungsanlage durchgeführt wird. Durch eine alternative oder zusätzliche Installation einer streckenseitigen Sensoreinrichtung im Bereich eines Einfahrgleises einer Zugbildungsanlage, d.h. in Gleisen einer Einfahrgruppe der Zugbildungsanlage, kann im Rahmen der Durchführung des Verfahrens vorteilhafterweise bereits in der Einfahrgruppe die Anzahl der Wagen des spurgebundenen Fahrzeugs verifiziert werden sowie eine Identifizierung von Wagen beziehungsweise Waggons mit schadhaften Bremssystemen vorgenommen werden. Eine frühzeitige diesbezügliche Information erlaubt vorteilhafterweise eine entsprechend angepasste Disposition der betroffenen Wagen, wodurch der Betriebsablauf der jeweiligen Zugbildungsanlage vorteilhafterweise weiter optimiert werden kann.

Das Ergebnis der Prüfung der Bremsen des spurgebundenen Fahrzeugs kann grundsätzlich auf beliebige, für sich bekannte Art und Weise ausgegeben und damit beispielsweise Bedien- und/oder Überwachungspersonal zugänglich gemacht beziehungsweise mitgeteilt werden.

Vorteilhafterweise kann das erfindungsgemäße Verfahren auch derart weitergebildet sein, dass ein Ergebnis der Prüfung der Bremsen des spurgebundenen Fahrzeugs auf zumindest einer Anzeigeeinrichtung, insbesondere einem mobilen Gerät, einer streckenseitigen Anzeigeeinrichtung und/oder einer fahrzeugseitigen Anzeigeeinrichtung, ausgegeben wird. Das Ausgeben des Ergebnisses der Prüfung der Bremsen des spurgebundenen Fahrzeugs auf der zumindest einen Anzeigeeinrichtung ist dahingehend vorteilhaft, dass hierdurch einer jeweiligen Bedienperson das Ergebnis der Prüfung der Bremsen auf einfache und zugleich übersichtliche Art und Weise vermittelt werden kann. Hierbei kann es sich bei der zumindest einen Anzeigeeinrichtung beispielsweise um ein mobiles Gerät eines zuständigen Wagenmeisters handeln. Zusätzlich oder alternativ hierzu kann die zumindest eine Anzeigeeinrichtung auch als streckenseitige Anzeigeeinrichtung ausgebildet sein, in welchem Fall beispielsweise einem Triebfahrzeugführer mittels eines streckenseitigen Anzeigetableaus das Ergebnis der Prüfung der Bremsen des spurgebundenen Fahrzeugs mitgeteilt werden kann. Darüber hinaus besteht auch die Möglichkeit, dass das Ergebnis der Prüfung der Bremsen auf einer fahrzeugseitigen Anzeigeeinrichtung, etwa in einem Führerstand des spurgebundenen Fahrzeugs, ausgegeben wird. Unabhängig von der Art der jeweiligen Anzeigeeinrichtung wird das Ergebnis der Prüfung der Bremsen des spurgebundenen Fahrzeugs vorteilhafterweise derart angezeigt, dass für die jeweilige Bedienperson unmittelbar verdeutlicht wird, welche der Bremsen nicht erfolgreich geprüft werden konnten und gegebenenfalls nochmals durch einen Mitarbeiter, etwa durch Inaugenscheinnahme, zu kontrollieren sind. Ergänzend zur Ausgabe auf zumindest einer Anzeigeeinrichtung kann die erfolgte Prüfung der Bremsen des spurgebundenen Fahrzeugs in Form eines zugehörigen Ergebnisprotokolls, gegebenenfalls zusammen mit einem Ergebnis einer durch einen Mitarbeiter vorgenommenen "manuellen" Nachinspektion, in einer Datenbank für spätere Auswertungen gespeichert werden. Darüber hinaus können schadhafte Waggons vorteilhafterweise über eine entsprechende Schnittstelle direkt zur Disponierung eines Werkstatttermins gemeldet werden.

Hinsichtlich der Vorrichtung wird die der vorliegenden Erfindung zugrunde liegende Aufgabe erfindungsgemäß gelöst durch eine Vorrichtung zum automatischen Prüfen von Bremsen eines spurgebundenen Fahrzeugs nach Anspruch 7, mit einer streckenseitigen Sensoreinrichtung zum Erfassen von auf eine Betätigung der Bremsen bezogenen Sensordaten während und/oder nach der Betätigung der Bremsen des spurgebundenen Fahrzeugs und einer Auswerteeinrichtung zum Prüfen der erfolgreichen Betätigung der jeweiligen Bremse oder einer jeweiligen Gruppe der Bremsen des spurgebundenen Fahrzeugs anhand einer für die jeweilige Bremse oder die jeweilige Gruppe der Bremsen spezifischen Auswertung der Sensordaten.

Bei der erfindungsgemäßen Vorrichtung ist die streckenseitige Sensoreinrichtung ein verteiltes akustisches Sensorsystem, das zumindest einen streckenseitig im Bereich des spurgebundenen Fahrzeugs verlegten Wellenleiter aufweist.

Die Vorteile der erfindungsgemäßen Vorrichtung entsprechen im Wesentlichen denjenigen des erfindungsgemäßen Verfahrens, so dass diesbezüglich auf die entsprechenden vorstehenden Ausführungen verwiesen wird. Gleiches gilt in entsprechender Weise hinsichtlich der im Folgenden genannten bevorzugten Weiterbildungen der erfindungsgemäßen Vorrichtung in Bezug auf die jeweilige entsprechende bevorzugte Weiterbildung des erfindungsgemäßen Verfahrens, so dass auch diesbezüglich auf die jeweiligen vorstehenden Erläuterungen verwiesen wird.

Vorzugsweise ist die erfindungsgemäße Vorrichtung derart weitergebildet, dass die streckenseitige Sensoreinrichtung ausgebildet ist, während und/oder nach einem Lösen der Bremsen des spurgebundenen Fahrzeugs auf das Lösen der Bremsen bezogene weitere Sensordaten zu erfassen, und die Auswerteeinrichtung ausgebildet ist, anhand einer für die jeweilige Bremse oder die jeweilige Gruppe der Bremsen spezifischen Auswertung der weiteren Sensordaten das erfolgreiche Lösen der jeweiligen Bremse oder der jeweiligen Gruppe der Bremsen zu prüfen.

Gemäß einer weiteren besonders bevorzugten Ausprägung der erfindungsgemäßen Vorrichtung ist die Auswerteeinrichtung ausgebildet, die Sensordaten im Rahmen der Auswertung mit zumindest einem Referenzwert zu vergleichen.

Vorzugsweise kann die erfindungsgemäße Vorrichtung auch derart ausgestaltet sein, dass die Auswerteeinrichtung ausgebildet ist, im Rahmen der Auswertung für das jeweilige spurgebundene Fahrzeug spezifische Fahrzeugdaten zu berücksichtigen.

Gemäß einer besonders bevorzugten Weiterbildung der erfindungsgemäßen Vorrichtung ist die streckenseitige Sensoreinrichtung in einem Ausfahrgleis oder in einem Einfahrgleis einer Zugbildungsanlage angeordnet.

Vorzugsweise kann die erfindungsgemäße Vorrichtung auch derart weitergebildet sein, dass sie ausgebildet ist, ein Ergebnis der Prüfung der Bremsen des spurgebundenen Fahrzeugs auf zumindest einer Anzeigeeinrichtung, insbesondere einem mobilen Gerät, einer streckenseitigen Anzeigeeinrichtung und/oder einer fahrzeugseitigen Anzeigeeinrichtung, auszugeben.
Im Folgenden wird die Erfindung anhand von Ausführungsbeispielen näher erläutert. Hierzu zeigt die
- Figur: zur Erläuterung eines Ausführungsbeispiels des erfindungsgemäßen Verfahrens in einer schematischen Skizze eine Anordnung mit einem Ausführungsbeispiel der erfindungsgemäßen Vorrichtung.

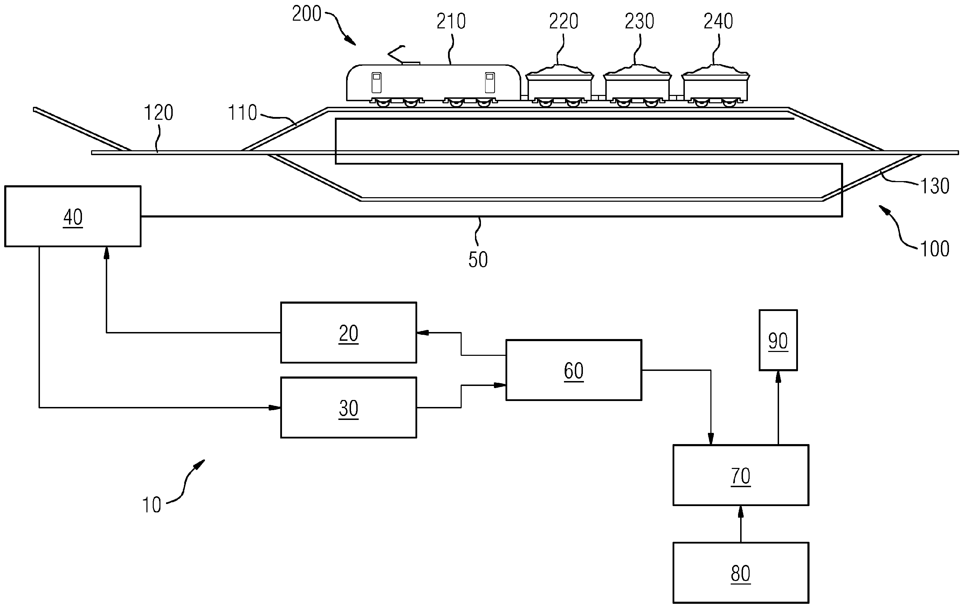

Die Figur zeigt eine Vorrichtung 10 zum Prüfen der Bremsen eines spurgebundenen Fahrzeugs 200. Dabei umfasst die Vorrichtung 10 eine Pulserzeugungseinrichtung 20, eine Detektionseinrichtung 30, eine Koppeleinrichtung 40, einen Wellenleiter 50, eine Steuer- und Analyseeinrichtung 60, eine Auswerteeinrichtung 70 und eine Anzeigeeinrichtung 90. Darüber hinaus ist weiterhin ein kommunikationstechnisch an die Auswerteeinrichtung 70 angebundenes Dispositionssystem 80 erkennbar, das gegebenenfalls ebenfalls als Bestandteil der Vorrichtung 10 betrachtet werden kann.

Die Pulserzeugungseinrichtung 20 weist vorzugsweise einen nicht weiter gezeigten Laser auf, der es ermöglicht, regelmäßig, beispielsweise in einer fest vorgegebenen Pulsrate, kurze elektromagnetische, insbesondere optische, Pulse zu erzeugen und über die Koppeleinrichtung 40 in den Wellenleiter 50 einzuspeisen. Die Pulserzeugungseinrichtung 20 wird hierbei vorzugsweise von der Steuer- und Analyseeinrichtung 60 angesteuert, so dass der Steuer- und Analyseeinrichtung 60 die Zeitpunkte der Pulserzeugung zumindest näherungsweise bekannt sind.

Die Detektionseinrichtung 30 weist beispielsweise einen Photodetektor auf, der das Detektieren elektromagnetischer Strahlung ermöglicht. Die Detektionseinrichtung 30 übermittelt ihre Messsignale an die Steuer- und Analyseeinrichtung 60, die diese auswertet. Durch die Pulserzeugungseinrichtung 20, die Detektionseinrichtung 30, die Koppeleinrichtung 40, den Wellenleiter 50 sowie die Steuer- und Analyseeinrichtung 60 wird somit eine streckenseitige Sensoreinrichtung in Form eines verteilten akustischen Sensorsystems gebildet, das üblicherweise auch als "Fiber Sensing"- beziehungsweise "Distributed Acoustic Sensing"-System bezeichnet wird und als solches bekannt sowie am Markt verfügbar ist.

An dieser Stelle sei vorsorglich darauf hingewiesen, dass die in der Figur mittels entsprechender Linien angedeuteten Kommunikationsverbindungen zwischen den Komponenten der Vorrichtung 10 für eine unidirektionale oder auch eine bidirektionale Kommunikation ausgebildet sein können. Sofern durch entsprechende Pfeile eine entsprechende Richtung angedeutet ist, so dient dies lediglich dazu, den im Zusammenhang mit der Beschreibung der Ausführungsbeispiele der vorliegenden Erfindung relevanten Kommunikations- beziehungsweise Signalfluss zu veranschaulichen und schließt damit insbesondere auch eine bidirektionale Kommunikation zwischen den betreffenden Komponenten nicht aus.

Der Wellenleiter 50 ist in einem Gleis- beziehungsweise Streckenbereich 100 mit Gleisen 110, 120 und 130 angeordnet. Dabei kann es sich bei dem Gleis- beziehungsweise Streckenbereich 100 beispielsweise um eine Einfahrgruppe oder eine Ausfahrgruppe einer Zugbildungsanlage handeln. Auf dem Gleis 110 steht das spurgebundene Fahrzeug 200 in Form eines Schienenfahrzeugs. Das spurgebundene Fahrzeug 200 besteht hierbei in dem dargestellten Ausführungsbeispiel aus einer Lokomotive 210 sowie gekuppelten Güterwagen 220, 230 und 240.

Die in der Figur dargestellte Vorrichtung 10 dient zum automatischen Prüfen der Bremsen des spurgebundenen Fahrzeugs 200 und kann nun beispielsweise derart betrieben werden, dass mittels der streckenseitigen Sensoreinrichtung, d.h. dem durch die Pulserzeugungseinrichtung 20, die Detektionseinrichtung 30, die Koppeleinrichtung 40, den Wellenleiter 50 sowie die Steuer- und Analyseeinrichtung 60 gebildeten verteilten akustischen Sensorsystem, während einer Betätigung der Bremsen des spurgebundenen Fahrzeugs 200 auf die Betätigung der Bremsen bezogene Sensordaten erfasst werden. Hierzu wird mittels der Pulserzeugungseinrichtung 20 über die Koppeleinrichtung 40 zumindest ein elektromagnetischer Puls in den Wellenleiter 50 eingespeist, bei dem im Rahmen des beschriebenen Ausführungsbeispiels angenommen sei, dass es sich um einen Lichtwellenleiter handelt. Durch die Detektionseinrichtung 30 wird sodann zumindest ein durch Rückstreuung des zumindest einen elektromagnetischen Pulses erzeugtes Rückstreumuster detektiert und seitens der Steuer- und Analyseeinrichtung 60 einer Auswertung unterzogen. Durch eine entsprechende Modulation, die durch die im Rahmen der Betätigung der Bremsen des spurgebundenen Fahrzeuges 200 auftretenden Geräusche ausgelöst ist, ist es der Steuer- und Analyseeinrichtung 60 hierbei möglich, auf die Betätigung der jeweiligen Bremse beziehungsweise einer jeweiligen Gruppe von Bremsen bezogene Sensordaten zu erfassen. Damit beziehen sich die Sensordaten auf die typischen Geräusche, die beispielsweise bei einer Betätigung von Bremsgestängen sowie durch das Anlegen von Bremsbacken an die Räder des spurgebundenen Fahrzeugs 200 entstehen. Durch die Steuer- und Analyseeinrichtung 60 kann hierbei gegebenenfalls eine Vorauswertung erfolgen sowie eine Übermittlung der (vorausgewerteten) Sensordaten an die Auswerteeinrichtung 70 vorgenommen werden.

Anhand einer für die jeweilige Bremse oder eine jeweilige Gruppe der Bremsen des spurgebundenen Fahrzeugs 200 spezifischen Auswertung der Sensordaten kann nun durch die Auswerteeinrichtung 70 die erfolgreiche Betätigung der jeweiligen Bremse oder der jeweiligen Gruppe der Bremsen automatisch geprüft werden. Vorzugsweise werden die Sensordaten hierbei im Rahmen der Auswertung mit zumindest einem Referenzwert verglichen, wobei sich der jeweilige Referenzwert beispielsweise auf eine Signatur in einem "Gutfall", d.h. bei einer erfolgreichen Betätigung der betreffenden Bremse, und/oder auf einen "Schlechtfall", d.h. eine nicht erfolgreiche Betätigung der betreffenden Bremse, beziehen kann. Dadurch, dass mittels der streckenseitigen Sensoreinrichtung in Form des "Fiber Sensing"-Systems eine Zuordnung der jeweiligen Sensordaten beziehungsweise Geräusche zu der jeweiligen Bremse beziehungsweise der jeweiligen Gruppe von Bremsen möglich ist, kann hierdurch somit eine automatische Prüfung der Bremsen des spurgebundenen Fahrzeugs 200, d.h. eine automatische Bremsprobe, erfolgen.

Im Rahmen der Auswertung berücksichtigt die Auswerteeinrichtung 70 vorzugsweise für das spurgebundene Fahrzeug 200 spezifische Fahrzeugdaten. Diese kann die Auswerteeinrichtung 70 beispielsweise von dem Dispositionssystem 80 empfangen, wobei die Fahrzeugdaten Angaben zur Fahrzeugkonfiguration, etwa in Bezug auf die Anzahl der Achsen und/oder Bremsen, enthalten können.

Mittels der streckenseitigen Sensoreinrichtung können darüber hinaus auch während des Lösens der Bremsen des spurgebundenen Fahrzeugs 200 auf das Lösen der Bremsen bezogene weitere Sensordaten erfasst werden und anhand einer für die jeweilige Bremse oder die jeweilige Gruppe der Bremsen des spurgebundenen Fahrzeugs 200 spezifischen Auswertung der weiteren Sensordaten das erfolgreiche Lösen der jeweiligen Bremse oder der jeweiligen Gruppe der Bremsen geprüft werden. Dies bietet den Vorteil, dass sowohl hinsichtlich des Betätigens der Bremsen als auch hinsichtlich des Lösens derselben eine automatische Funktionsprüfung ermöglicht wird.

Das Ergebnis der Prüfung der Bremsen des spurgebundenen Fahrzeugs 200 wird von der Auswerteeinrichtung 70 auf der Anzeigeeinrichtung 90 ausgegeben. Im Rahmen des beschriebenen Ausführungsbeispiels sei hierbei angenommen, dass es sich bei der Anzeigeeinrichtung 90 um ein mobiles Gerät eines zuständigen Wagenmeisters handelt. Dabei enthält das Ergebnis der Prüfung der Bremsen vorteilhafterweise insbesondere eine Meldung dahingehend, welche Bremse nochmals per Inaugenscheinnahme zu prüfen ist. Zusätzlich oder alternativ zur Verwendung eines mobilen Gerätes als Anzeigeeinrichtung könnte darüber hinaus auch eine streckenseitige Anzeigeeinrichtung und/oder eine fahrzeugseitige Anzeigeeinrichtung zum Ausgeben des Ergebnisses der Prüfung der Bremsen des spurgebundenen Fahrzeugs 200 verwendet werden.

Ein Ergebnisprotokoll der durchgeführten Prüfung der Bremsen des spurgebundenen Fahrzeugs 200 wird vorzugsweise zusammen mit dem Ergebnis einer gegebenenfalls durch einen Mitarbeiter vorgenommenen Nachinspektion in einer Datenbank für eine spätere Auswertung gespeichert. Dabei kann die entsprechende Datenbank beispielsweise an die Auswerteeinrichtung 70 oder an das Dispositionssystem 80 angebunden sein. Darüber hinaus können schadhafte Waggons von der Auswerteeinrichtung 70 an das Dispositionssystem 80 gemeldet werden, wodurch es diesem ermöglicht wird, für die betreffenden Waggons einen Werkstatttermin zu planen beziehungsweise anzufordern.

Entsprechend den vorstehenden Ausführungen im Zusammenhang mit den beschriebenen Ausführungsbeispielen des erfindungsgemäßen Verfahrens sowie der erfindungsgemäßen Vorrichtung weisen diese insbesondere den Vorteil auf, dass sie eine automatische Prüfung der Bremsen des spurgebundenen Fahrzeugs 200 ermöglichen, ohne dass hierfür zusätzliche Ausrüstung auf dem spurgebundenen Fahrzeug 200, d.h. der Lokomotive 210 oder den Güterwagen 220, 230 und 240, benötigt wird. Durch die Verwendung einer streckenseitigen Sensoreinrichtung ist somit der Prüfung der Bremsen des spurgebundenen Fahrzeugs 200 unabhängig davon möglich, welchen Ausrüstungsstand die Güterwagen 220, 230 und 240 aufweisen. Damit ist eine Prüfung der Bremsen des spurgebundenen Fahrzeugs 200 umgehend nach einer einmalig vorzunehmenden Installation der streckenseitigen Sensoreinrichtung sowie der Auswerteeinrichtung 70 für alle Waggons beziehungsweise Güterwagen möglich, d.h. auch für solche von Drittanbietern. Durch eine entsprechende, von dem Ausrüstungsstand der Waggons unabhängige Prüfung der Bremsen des spurgebundenen Fahrzeugs, d.h. eine automatische Bremsprobe, wird damit insbesondere im Zusammenhang mit einer Automatisierung von Zugbildungsanlagen ein wesentlicher Automatisierungsschritt bereitgestellt. Hierdurch können sich in Abhängigkeit von den jeweiligen Umständen insbesondere Vorteile in Bezug auf eine schnellere Bereitstellung spurgebundener Fahrzeuge, einen effektiveren Personaleinsatz, eine höhere Betriebssicherheit sowie eine automatische Protokollierung der durchgeführten Prüfung der Bremsen ergeben.

## Patentansprüche

1. Verfahren zum automatischen Prüfen von Bremsen eines spurgebundenen Fahrzeugs (200), wobei
- mittels einer streckenseitigen Sensoreinrichtung während und/oder nach einer Betätigung der Bremsen des spurgebundenen Fahrzeugs (200) auf die Betätigung der Bremsen bezogene Sensordaten erfasst werden und
- anhand einer für die jeweilige Bremse oder eine jeweilige Gruppe der Bremsen des spurgebundenen Fahrzeugs (200) spezifischen Auswertung der Sensordaten die erfolgreiche Betätigung der jeweiligen Bremse oder der jeweiligen Gruppe der Bremsen geprüft wird,
**dadurch gekennzeichnet, dass**
die Sensordaten mittels einer streckenseitigen Sensoreinrichtung in Form eines verteilten akustischen Sensorsystems (20, 30, 40, 50, 60) erfasst werden, das zumindest einen streckenseitig im Bereich des spurgebundenen Fahrzeugs verlegten Wellenleiter (50) aufweist.

2. Verfahren nach Anspruch 1,
**dadurch gekennzeichnet, dass**
- mittels der streckenseitigen Sensoreinrichtung während und/oder nach einem Lösen der Bremsen des spurgebundenen Fahrzeugs (200) auf das Lösen der Bremsen bezogene weitere Sensordaten erfasst werden und
- anhand einer für die jeweilige Bremse oder die jeweilige Gruppe der Bremsen des spurgebundenen Fahrzeugs (200) spezifischen Auswertung der weiteren Sensordaten das erfolgreiche Lösen der jeweiligen Bremse oder der jeweiligen Gruppe der Bremsen geprüft wird.

3. Verfahren nach einem der vorangehenden Ansprüche,
**dadurch gekennzeichnet, dass**
die Sensordaten im Rahmen der Auswertung mit zumindest einem Referenzwert verglichen werden.

4. Verfahren nach einem der vorangehenden Ansprüche,
**dadurch gekennzeichnet, dass**
im Rahmen der Auswertung für das jeweilige spurgebundene Fahrzeug (200) spezifische Fahrzeugdaten berücksichtigt werden.

5. Verfahren nach einem der vorangehenden Ansprüche,
**dadurch gekennzeichnet, dass**
die Sensordaten mittels einer im Bereich eines Ausfahrgleises oder im Bereich eines Einfahrgleises einer Zugbildungsanlage angeordneten streckenseitigen Sensoreinrichtung erfasst werden.

6. Verfahren nach einem der vorangehenden Ansprüche,
**dadurch gekennzeichnet, dass**
ein Ergebnis der Prüfung der Bremsen des spurgebundenen Fahrzeugs (200) auf zumindest einer Anzeigeeinrichtung (90), insbesondere einem mobilen Gerät, einer streckenseitigen Anzeigeeinrichtung und/oder einer fahrzeugseitigen Anzeigeeinrichtung, ausgegeben wird.

7. Vorrichtung (10) zum automatischen Prüfen von Bremsen eines spurgebundenen Fahrzeugs (200), mit
- einer streckenseitigen Sensoreinrichtung zum Erfassen von auf eine Betätigung der Bremsen bezogenen Sensordaten während und/oder nach der Betätigung der Bremsen des spurgebundenen Fahrzeugs (200) und
- einer Auswerteeinrichtung (70) zum Prüfen der erfolgreichen Betätigung der jeweiligen Bremse oder einer jeweiligen Gruppe der Bremsen des spurgebundenen Fahrzeugs (200) anhand einer für die jeweilige Bremse oder die jeweilige Gruppe der Bremsen spezifischen Auswertung der Sensordaten,
**dadurch gekennzeichnet, dass** die streckenseitige Sensoreinrichtung ein verteiltes akustisches Sensorsystem (20, 30, 40, 50, 60) ist, das zumindest einen streckenseitig im Bereich des spurgebundenen Fahrzeugs verlegten Wellenleiter (50) aufweist.

8. Vorrichtung nach Anspruch 7, **dadurch gekennzeichnet, dass**
- die streckenseitige Sensoreinrichtung ausgebildet ist, während und/oder nach einem Lösen der Bremsen des spurgebundenen Fahrzeugs (200) auf das Lösen der Bremsen bezogene weitere Sensordaten zu erfassen, und
- die Auswerteeinrichtung (70) ausgebildet ist, anhand einer für die jeweilige Bremse oder die jeweilige Gruppe der Bremsen spezifischen Auswertung der weiteren Sensordaten das erfolgreiche Lösen der jeweiligen Bremse oder der jeweiligen Gruppe der Bremsen zu prüfen.

9. Vorrichtung nach einem der Ansprüche 7 oder 8, **dadurch gekennzeichnet, dass**
die Auswerteeinrichtung (70) ausgebildet ist, die Sensordaten im Rahmen der Auswertung mit zumindest einem Referenzwert zu vergleichen.

10. Vorrichtung nach einem der Ansprüche 7 bis 9, **dadurch gekennzeichnet, dass**
die Auswerteeinrichtung (70) ausgebildet ist, im Rahmen der Auswertung für das jeweilige spurgebundene Fahrzeug (200) spezifische Fahrzeugdaten zu berücksichtigen.

11. Vorrichtung nach einem der Ansprüche 7 bis 10, **dadurch gekennzeichnet, dass**
die streckenseitige Sensoreinrichtung in einem Ausfahrgleis oder in einem Einfahrgleis einer Zugbildungsanlage angeordnet ist.

12. Vorrichtung nach einem der Ansprüche 7 bis 11, **dadurch gekennzeichnet, dass**
sie ausgebildet ist, ein Ergebnis der Prüfung der Bremsen des spurgebundenen Fahrzeugs (200) auf zumindest einer Anzeigeeinrichtung (90), insbesondere einem mobilen Gerät, einer streckenseitigen Anzeigeeinrichtung und/oder einer fahrzeugseitigen Anzeigeeinrichtung, auszugeben.

## Claims

1. Method for automatically checking the brakes of a track-bound vehicle (200), wherein
- sensor data relating to the actuation of the brakes is captured by means of a trackside sensor device during and/or after an actuation of the brakes of the track-bound vehicle (200), and
- the successful actuation of the respective brake or the respective group of brakes is checked on the basis of an evaluation of the sensor data specific to the respective brake or a respective group of brakes of the track-bound vehicle (200),
**characterised in that**
the sensor data is captured by means of a trackside sensor device in the form of a distributed acoustic sensor system (20, 30, 40, 50, 60) which has at least one waveguide (50) installed trackside in the region of the track-bound vehicle.

2. Method according to claim 1,
**characterised in that**
- further sensor data relating to the release of the brakes is captured by means of the trackside sensor device during and/or after the release of the brakes of the track-bound vehicle (200), and
- the successful release of the respective brake or the respective group of brakes is checked on the basis of an evaluation of the further sensor data specific to the respective brake or the respective group of brakes of the track-bound vehicle (200).

3. Method according to one of the preceding claims,
**characterised in that**
the sensor data is compared with at least one reference value in the course of the evaluation.

4. Method according to one of the preceding claims,
**characterised in that**
vehicle data specific to the respective track-bound vehicle (200) is taken into account in the course of the evaluation.

5. Method according to one of the preceding claims,
**characterised in that**
the sensor data is captured by means of a track-side sensor device arranged in the region of an exit track or in the region of an entry track of a train formation yard.

6. Method according to one of the preceding claims,
**characterised in that**
a result of the check on the brakes of the track-bound vehicle (200) is output on at least one display device (90), in particular a mobile device, a trackside display device and/or a vehicle-side display device.

7. Device (10) for automatically checking the brakes of a track-bound vehicle (200), having
- a trackside sensor device for capturing sensor data relating to an actuation of the brakes during and/or after the actuation of the brakes of the track-bound vehicle (200) and
- an evaluation device (70) for checking the successful actuation of the respective brake or a respective group of brakes of the track-bound vehicle (200) on the basis of an evaluation of the sensor data specific to the respective brake or the respective group of brakes,
**characterised in that**
the trackside sensor device is a distributed acoustic sensor system (20, 30, 40, 50, 60) which has at least one waveguide (50) installed trackside in the region of the track-bound vehicle.

8. Device according to claim 7,
**characterised in that**
- the track-side sensor device is designed to capture further sensor data relating to the release of the brakes during and/or after a release of the brakes of the track-bound vehicle (200), and
- the evaluation device (70) is designed to check the successful release of the respective brake or the respective group of brakes on the basis of an evaluation of the further sensor data specific to the respective brake or the respective group of brakes.

9. Device according to one of claims 7 or 8,
**characterised in that**
the evaluation device (70) is designed to compare the sensor data with at least one reference value in the course of the evaluation.

10. Device according to one of claims 7 to 9,
**characterised in that**
the evaluation device (70) is designed to take into account vehicle data specific to the respective track-bound vehicle (200) in the course of the evaluation.

11. Device according to one of claims 7 to 10,
**characterised in that**
the trackside sensor device is arranged in an exit track or in an entry track of a train formation yard.

12. Device according to one of claims 7 to 11,
**characterised in that**
it is designed to output a result of checking the brakes of the track-bound vehicle (200) on at least one display device (90), in particular a mobile device, a trackside display device and/or a vehicle-side display device.

## Revendications

1. Procédé de contrôle automatique de freins d'un véhicule (200) guidé sur rail, dans lequel
- au moyen d'un dispositif à capteur sur la voie, on relève, pendant et/ou après un actionnement des freins du véhicule (200) guidé sur rail, des données de capteur se rapportant à l'actionnement des freins et
- à l'aide d'une évaluation, spécifique au frein respectif ou à un groupe respectif des freins du véhicule (200) guidé sur rail, des données du capteur, on contrôle l'actionnement couronné de succès du frein respectif ou du groupe respectif des freins,
**caractérisé en ce que**
on relève les données du capteur au moyen d'un dispositif à capteur sur la voie sous la forme d'un système (20, 30, 40, 50, 60) de capteurs acoustiques répartis, qui a au moins un guide d'ondes posé sur la voie dans la région du véhicule guidé sur rail.

2. Procédé suivant la revendication 1,
**caractérisé en ce que**
- au moyen du dispositif à capteur sur la voie, on relève, pendant et/ou après un desserrage des freins du véhicule (200) guidé sur rail, d'autres données du capteur se rapportant au desserrage des freins et
- à l'aide d'une évaluation, spécifique au frein respectif ou au groupe respectif des freins du véhicule (200) guidé sur rail, des autres données du capteur, on contrôle le desserrage couronné de succès du frein respectif ou du groupe respectif des freins.

3. Procédé suivant l'une des revendications précédentes,
**caractérisé en ce que**
l'on compare les données du capteur, dans le cadre de l'évaluation, à au moins une valeur de référence.

4. Procédé suivant l'une des revendications précédentes,
**caractérisé en ce que**,
dans le cadre de l'évaluation, on prend en compte des données de véhicule spécifiques au véhicule (200) respectif guidé sur rail.

5. Procédé suivant l'une des revendications précédentes,
**caractérisé en ce que**
l'on relève les données du capteur au moyen d'un dispositif à capteur sur la voie, disposé dans la région d'un rail de sortie ou dans la région d'un rail d'entrée d'une installation de formation d'un train.

6. Procédé suivant l'une des revendications précédentes,
**caractérisé en ce que**
l'on émet un résultat du contrôle des freins du véhicule (200) guidé sur rail sur au moins un dispositif (90) d'affichage, notamment sur un appareil mobile, un dispositif d'affichage sur la voie et/ou un dispositif d'affichage sur le véhicule.

7. Système (10) de contrôle automatique de freins d'un véhicule (200) guidé sur rail, comprenant
- un dispositif à capteur sur la voie pour relever des données de capteur se rapportant à un actionnement des freins pendant et/ou après l'actionnement des freins du véhicule (200) guidé sur rail et
- un dispositif (70) d'évaluation pour contrôler l'actionnement couronné de succès du frein respectif ou d'un groupe respectif des freins du véhicule (200) guidé sur rail, à l'aide d'une évaluation, spécifique au frein respectif ou au groupe respectif des freins, des données du capteur,
**caractérisé en ce que** le dispositif à capteur sur la voie est un système (20, 30, 40, 50, 60) de capteurs acoustiques répartis, qui a au moins un guide d'ondes (50) posé sur la voie dans la région du véhicule guidé sur rail.

8. Système suivant la revendication 7,
**caractérisé en ce que**
- le dispositif à capteur sur la voie est constitué pour relever, pendant et/ou après un desserrage des freins du véhicule (200) guidé sur rail, d'autres données de capteur se rapportant au desserrage des freins, et
- le dispositif (71) d'évaluation est constitué pour, à l'aide d'une évaluation, spécifique au frein respectif ou au groupe respectif des freins, des autres données de capteur, contrôler le desserrage couronné de succès du frein respectif ou du groupe respectif des freins.

9. Système suivant l'une des revendications 7 ou 8,
**caractérisé en ce que**
le dispositif (70) d'évaluation est constitué pour comparer les données du capteur, dans le cadre de l'évaluation, à au moins une valeur de référence.

10. Système suivant l'une des revendications 7 à 9,
**caractérisé en ce que**
le dispositif (70) d'évaluation est constitué pour tenir compte, dans le cadre de l'évaluation de données, de véhicule spécifique au véhicule (200) respectif guidé sur rail.

11. Système suivant l'une des revendications 7 à 10,
**caractérisé en ce que**
le dispositif à capteur sur la voie est disposé dans un rail de sortie ou dans un rail d'entrée d'une installation de formation d'un train.

12. Système suivant l'une des revendications 7 à 11,
**caractérisé en ce qu'**
il est constitué pour émettre un résultat du contrôle des freins du véhicule (200) guidé sur rail sur au moins un dispositif (90) d'affichage, notamment sur un appareil mobile, un dispositif d'affichage sur la voie et/ou un dispositif d'affichage sur le véhicule.
